# EUROPEAN PATENT APPLICATION

(11) **EP 1 152 029 A1**
(43) Date of publication of application: **07.11.2001**
(21) Application number: 99954369.7
(22) Date of filing: 04.11.1999
(51) Int. Cl.: C08L 9/02, C08L 27/06

(54) **POLYBLEND COMPOSITION, CROSSLINKED OBJECT, AND HOSE FOR FUEL**

(30) Priority: 04.11.1998 JP 31331598
(71) Applicant: NIPPON ZEON CO., LTD., Chiyoda-ku Tokyo 100-8323 (JP)
(72) Inventor: FUKUDA, Hideo, Res. Dev. Ctr., Nippon Zeon Co. Ltd, Kawasaki-shi, Kanagawa 210-9507 (JP); KONNO, Tsuyoshi, Res.Dev.Ctr., Nippon Zeon Co. Ltd, Kawasaki-shi, Kanagawa 210-9507 (JP)
(74) Representative: Albrecht, Thomas, Dr.
(86) International application number: JP9906136
(87) International publication number: WO0026292

(57) **Abstract**

A polyblend composition comprising (a) a nitrile rubber having a bound α,β-unsaturated nitrile content of at least 44% by weight, (b) a vinyl chloride resin, and (c) an alkanedicarboxylic acid ether ester plasticizer having a C₃₋₈ alkane structure; a cross-linked object obtained by crosslinking the polyblend composition; and a fuel hose comprising the cross-linked object.

## Description

### Technical Field

This invention relates to a polyblend composition suitable as a material for a fuel hose having well-balanced resistance to permeation of gasoline and resistance to cold; a crosslinked object prepared by crosslinking the polyblend composition; and a fuel hose comprising the crosslinked object.

### Background Art

In recent years, it has been required to suppress the evaporation of gasoline into the atmosphere for protection of the environment. Restrictions have become tightened on gasoline permeation of a fuel hose used for automobile fuel piping or other fuel piping.

A single-layer hose made of a medium-high acrylonitrile-butadiene copolymer rubber has heretofore been used as a fuel hose. (An acrylonitrile-butadiene copolymer rubber is hereinafter abbreviated to "NBR". By the term "medium-high" used herein we mean that the content of bound α,β-ethylenically unsaturated nitrile is at least 31% by weight and smaller than 43% by weight.) However, this hose has a problem such that the resistance to gasoline permeation is poor.

To solve the problem of poor resistance to gasoline permeation, a multi-layer hose has been proposed, which comprises a rubber layer made of NBR or other rubber and a fluoro-resin layer formed on the inner surface of the rubber layer, or has a multi-layer structure comprising an outer NBR layer or epichlorohydrin rubber layer and an inner fluororubber layer. The proposed multi-layer hose has a problem such that, to enhance adhesion of a fluoro-polymer onto a rubber to an appreciable extent, it is required to conduct a special treatment on the surface of rubber to be adhered to the fluoro-polymer, or to incorporate a special ingredient in rubber, and thus, the production process becomes complicated. Further, a fluoro-polymer and an ingredient incorporated for enhancing the adhesion are very expensive. For this reason, fuel hoses made of a fluoro-polymer have not widely been used.

A polyblend comprised of a high NBR having a content of bound α,β-ethylenically unsaturated nitrile larger than that of the medium-high NBR, and a vinyl chloride resin exhibits a resistance to gasoline permeation at an acceptable level. (By the term "high NBR" used herein we mean that the content of bound α,β-ethylenically unsaturated nitrile in NBR is at least 43% by weight.) However, this polyblend has a poor cold resistance and hence it has not become practical for a fuel hose.

### Disclosure of the Invention

In view of the foregoing, a primary object of the present invention is to provide a polyblend composition comprising (a) a nitrile rubber having a high α,β-unsaturated nitrile-conjugated diene copolymer rubber and a vinyl chloride resin, which is suitable as a material for a fuel hose exhibiting, even when the fuel hose has a single layer structure, a markedly reduced gasoline permeation, and further exhibiting excellent cold resistance in spite of the markedly reduced gasoline permeation.

To achieve the above-mentioned object, the inventors conducted researches into various plasticizers to be incorporated in the polyblend composition, and found that a specific alkanedicarboxylic acid ether ester plasticizer gives an improved polyblend composition exhibiting more enhanced gasoline permeation resistance, and further more enhanced cold resistance in spite of the markedly enhanced gasoline permeation resistance. Based on this finding, the inventors have completed the present invention.

In accordance with the present invention, there are provided a polyblend composition comprising (a) a nitrile rubber having a bound α,β-unsaturated nitrile content of at least 43% by weight, (b) a vinyl chloride resin, and (c) an alkanedicarboxylic acid ether ester plasticizer having an alkane structure with 3 to 8 carbon atoms; a crosslinked object prepared by crosslinking the polyblend composition; and a fuel hose comprising the crosslinked object.

### Best Mode for Carrying Out the Invention

The invention will now be described in detail.

The nitrile rubber (a) used in the invention is a copolymer rubber of an α,β-ethylenically unsaturated nitrile monomer and a conjugated diene monomer wherein the content of α,β-ethylenically unsaturated nitrile monomer units is in the range of 43 to 60% by weight.

The nitrile rubber (a) used in the invention is prepared by copolymerizing at least one kind of an α,β-ethylenically unsaturated nitrile monomer such as acrylonitrile and methacrylonitrile, and at least one kind of a conjugated diene monomer such as 2-methyl-1,3-butadiene, 1,3-butadiene, 1,3-pentadiene and 2-chloro-1,3-butadiene.

If desired, at least one monomer copolymerizable with the α,β-ethylenically unsaturated nitrile monomer and the conjugated diene monomer can be further copolymerized. The copolymerizable monomer includes, for example, unsaturated carboxylic acids such as acrylic acid, methacrylic acid, maleic acid, fumaric acid and itaconic acid; acrylic acid esters and methacrylic acid esters such as methyl acrylate, methyl methacrylate, ethyl acrylate, ethyl methacrylate, butyl acrylate, butyl methacrylate, 2-ethylhexyl acrylate, 2-ethylhexyl methacrylate, lauryl acrylate, lauryl methacrylate, glycidyl acrylate, glycidyl methacrylate, 2-hydroxyethyl acrylate and 2-hydroxyethyl methacrylate; and acrylic acid amide, methacrylic acid amide and their derivatives such as acrylamide, methacrylamide, N-methylolacrylamide, N-methylolmethacrylamide, N-butoxyacrylamide and N-butoxymethacrylamide.

The amount of bound α,β-ethylenically unsaturated nitrile in nitrile rubber (a) is in the range of 43 to 60% by weight, preferably 44 to 55% by weight and more preferably 44 to 52% by weight. If the amount of bound α,β-ethylenically unsaturated nitrile in nitrile rubber (a) is too large, the resulting crosslinked object has a poor cold resistance. In contrast, if it is too small, the crosslinked object has a poor gasoline permeation resistance. An appropriate amount of bound α,β-ethylenically unsaturated nitrile in nitrile rubber (a) is determined depending upon the oil resistance, gasoline permeation resistance and cold resistance of the crosslinked object, which are required for a fuel hose.

The amount of bound conjugated diene in nitrile rubber (a) is in the range of 57 to 25% by weight, preferably 56 to 30% by weight and more preferably 56 to 33% by weight.

The amount of the optional copolymerizable monomer in nitrile rubber (a) is not larger than 15% by weight, preferably not larger than 10% and more preferably not larger than 5% by weight. If the amount of the optional copolymerizable monomer is too large, a crosslinked object of the polyblend of the invention occasionally does not exhibit improved gasoline permeation resistance.

Among nitrile rubbers (a), an acrylonitrile-butadiene copolymer rubber (NBR) is preferable.

Nitrile rubber (a) preferably has a Mooney viscosity (ML₁₊₄, 100°C) of 25 to 140, more preferably 35 to 100 and especially preferably 45 to 90. When the Mooney viscosity is too large or too small, the polyblend rubber composition has a poor moldability.

Vinyl chloride resin (b) used in the invention includes polyvinyl chloride, and copolymer resins of vinyl chloride and a monomer or monomers copolymerizable with vinyl chloride. Of these, polyvinyl chloride is preferable. Vinyl chloride resin (b) preferably has a polymerization degree of 550 to 2,500, more preferably 600 to 2,200 and especially preferably 650 to 2,000. When the polymerization degree of vinyl chloride resin (b) is too small, the polyblend composition gives a crosslinked object having poor ozone resistance, and has a high viscosity and poor moldability and processability.

For the preparation of the polyblend composition of the invention, plasticizer (c), explained below, and optional ingredients may be incorporated in a mixture of nitrile rubber (a) and vinyl chloride resin (b); or, nitrile rubber (a) and vinyl chloride resin (b), plasticizer (c), explained below, and optional ingredients may be mixed together. For previously mixing nitrile rubber (a) with vinyl chloride resin (c), various methods can be employed, which include, for example, a latex-blending method wherein a latex of nitrile rubber (a) is mixed together with a latex of vinyl chloride resin (b), and then nitrile rubber (a) and vinyl chloride resin (b) are co-precipitated; and a dry blending method wherein solid nitrile rubber (a) and solid vinyl chloride resin (b) are mixed together under heated conditions by using a mixer such as a roll mixer or a Banbury mixer. The thus-prepared blend is usually called as polyblend.

The plasticizer (c) used in the invention is an alkanedicarboxylic acid ether ester plasticizer having an alkane structure with 3 to 8 carbon atoms, preferably 4 to 8 carbon atoms. When the number of carbon atoms is too large or too small, the polyblend composition gives a crosslinked object occasionally exhibiting poor gasoline permeation resistance or poor cold resistance.

By the term "alkanedicarboxylic acid ether ester" used herein we mean an esterification product of an alkanedicarboxylic acid represented by the following general formula (1) with an alcohol having an ether bond in the molecule.

General formula (1): HOOC(CH₂)ₙCOOH

wherein n is an integer of 3 to 8, preferably 4 to 8.

The alcohol having an ether bond in the molecule preferably has 4 to 10 carbon atoms, and more preferably 6 to 8 carbon atoms. The ether bond contained in the alcohol preferably has 1 to 4 oxygen atoms, and more preferably 1 or 2 oxygen atoms. When the number of oxygen atoms constituting the ether bond in the alcohol is too large, the polyblend composition gives a crosslinked object having poor gasoline permeation resistance or cold resistance. As specific examples of the alcohol having such ether bond, there can be mentioned butoxyethyl alcohol, propoxypropyl alcohol, ethoxybutyl alcohol, methoxypentyl alcohol, pentoxyethyl alcohol, butoxypropyl alcohol, propoxybutyl alcohol, ethoxypentyl alcohol, methoxyhexyl alcohol, pentoxypropyl alcohol, butoxybutyl alcohol, propoxypentyl alcohol, ethoxyhexyl alcohol, methoxyheptyl alcohol, butoxyethoxyethyl alcohol, propoxypropoxyethyl alcohol, propoxyethoxypropyl alcohol, ethoxypropoxypropyl alcohol, methoxybutoxypropyl alcohol and ethoxyethoxybutyl alcohol.

The alkanedicarboxylic acid ether ester having an alkane structure with 3 to 8 carbon atoms used in the invention can be prepared by combining appropriately an alkanedicarboxylic acid of formula (1) with an alcohol having an ether bond in the molecule. Of the alkanedicarboxylic acid ether esters, a diester is preferably used.

Plasticizer (c) preferably includes those which are not readily extracted by gasoline from the crosslinked object, and which are capable of giving a crosslinked object having a low brittle temperature and exhibiting a reduced gasoline permeability as compared with the case where dioctyl adipate plasticizer is incorporated in the same amount.

As specific examples of the preferable plasticizer (c), there can be mentioned dibutoxyethyl adipate (commercially available as, for example, "RS-107" from Asahi Denka Kogyo K.K.) and di(butoxyethoxyethyl) adipate (commercially available as, for example, "TP-95" from Thiokol Chemical Corp.).

The polyblend composition of the present invention comprises (a) a nitrile rubber having a bound α,β-unsaturated nitrile content of at least 43% by weight, (b) a vinyl chloride resin, and (c) an alkanedicarboxylic acid ether ester plasticizer having an alkane structure with 3 to 8 carbon atoms.

The proportion of nitrile rubber (a) and vinyl chloride resin (c) in the polyblend composition of the invention is such that the amount of nitrile rubber (a) is preferably 95 to 50% by weight, more preferably 90 to 55% by weight and especially preferably 85 to 60% by weight, and the amount of vinyl chloride resin (c) is preferably 5 to 50% by weight, more preferably 10 to 45% by weight and especially preferably 15 to 40% by weight, based on the total weight of nitrile rubber (b) and vinyl chloride resin (c). When the proportion of nitrile rubber (a) is too large, i.e., the proportion of vinyl chloride resin (c) is too small, the polyblend composition gives a crosslinked object occasionally exhibiting poor gasoline permeation resistance. In contrast, when the proportion of nitrile rubber (a) is too small, i.e., the proportion of vinyl chloride resin (c) is too large, the polyblend composition gives a crosslinked object occasionally exhibiting poor thermal resistance and large permanent set.

The amount of alkanedicarboxylic acid ether ester plasticizer (c) in the polyblend composition of the invention can be determined so that good balance is obtained between the cold resistance and gasoline permeation resistance. The amount of alkanedicarboxylic acid ether ester plasticizer (c) is preferably in the range of 5 to 50 parts by weight, more preferably 7 to 40 parts by weight, and especially preferably 10 to 35 parts by weight, based on 100 parts by weight of the sum of nitrile rubber (a) and vinyl chloride resin (b). When the amount of plasticizer (c) is too small, the polyblend gives a crosslinked object occasionally exhibiting poor cold resistance. In contrast, when the amount of plasticizer (c) is too large, bleeding of plasticizer (c) from the crosslinked object is liable to occur, or the crosslinked object occasionally exhibits poor gasoline permeation resistance.

The polyblend composition of the invention can be prepared by mixing and kneading together nitrile rubber (a), vinyl chloride resin (b), plasticizer (c) and optional ingredients such as crosslinking ingredient, filler, reinforcer, processing aid, anti-aging agent and others by an ordinary mixer such as a roll mixer, a Banbury mixer and an internal mixer.

The polyblend of the invention may have incorporated therein a rubber other than nitrile rubber (a), and a resin other than vinyl chloride resin (c), provided that the object of the invention can be achieved. The amount of the optional rubber and resin is not larger than 20 parts by weight, preferably not larger than 15 parts by weight and more preferably not larger than 10 parts by weight, based on 100 parts by weight of the sum of nitrile rubber (a) and vinyl chloride resin (c). If the amount of optional rubber is too large, the crosslinked object occasionally exhibits poor gasoline permeation resistance, cold resistance or ozone resistance. As specific examples of the rubber other than nitrile rubber (a), there can be mentioned chloroprene rubber, chlorosulfonated polyethylene, chlorinated polyethylene, ethylene oxide-epichlorohydrin copolymer rubber and ethyl acrylate/2-chloroethyl-vinyl-ether copolymer rubber. As specific examples of the resin other than vinyl chloride resin (b), there can be mentioned phenolic reins, vinyl acetate resins, epoxy resins, nylon resins and acrylate resins.

The optional ingredients such as filler, reinforcer, processing aid and anti-aging agent are not particularly limited, and conventional ingredients used for hitherto known polyblends can be used.

The crosslinking ingredient includes a crosslinking agent as an essential component and an optional crosslinking aid. The polyblend composition comprising the crosslinking ingredient is a crosslinkable polyblend composition, which is cured by heating to give a crosslinked object. The crosslinking agent includes a sulfur-containing vulcanizing agent and an organic peroxide crosslinking agent.

The sulfur-containing vulcanizing agent includes sulfur, a sulfur-donating compound, a thiuram compound and a morpholine compound. The crosslinking aid, optionally used in combination with the crosslinking agent, includes zinc oxide, stearic acid, a thiuram crosslinking accelerator, a guanidine crosslinking accelerator, a sulfenamide crosslinking accelerator, thiazole crosslinking accelerator and a dithiocarbamic acid crosslinking accelerator.

Where a sulfur-containing crosslinking agent is used, its amount is preferably in the range of 0.01 to 10 parts by weight, more preferably 0.05 to 8 parts by weight and especially preferably 0.1 to 5 parts by weight, based on 100 parts by weight of the sum of nitrile rubber (a) and vinyl chloride resin (b). When the amount of the crosslinking agent is too small, the polyblend composition is not crosslinked to the desired extent, and the crosslinked object is liable to have a low mechanical strength. In contrast, when the amount of the crosslinking agent is too large, the rate of crosslinking is too high and difficult to control, and the polyblend composition containing the crosslinking ingredient has poor moldability and processability. Where a sulfur-containing crosslinking agent is used, the above-mentioned crosslinking aid is used preferably in an amount of 1 to 20 parts by weight, more preferably 2 to 15 parts by weight and especially preferably 2 to 10 parts by weight, based on 100 parts by weight of the sum of nitrile rubber (a) and vinyl chloride resin (b). When the amount of the crosslinking aid is too small, the polyblend composition is not crosslinked to the desired extent, and the crosslinked object is liable to have a low mechanical strength. In contrast, when the amount of the crosslinking aid is too large, the rate of crosslinking is too high and difficult to control, and the crosslinkable polyblend composition has poor moldability and processability.

The organic peroxide crosslinking agent is an organic compound having a structure represented by the formula (-O-O-) in the molecule. As specific examples of the organic peroxide crosslinking agent, there can be mentioned dicumyl peroxide, di-tert-butyl peroxide, tert-butylcumyl peroxide, benzoyl peroxide, 2,4-dichlorobenzoyl peroxide, 2,5-dimethyl-2,5-di(tert-butylperoxy)hexyne-3, 2,5-dimethyl-2,5-di(tert-butylperoxy)hexane, 1,1-di(tert-butylperoxy)-3,3,5-trimethylcyclohexane, tert-butyl peroxybenzoate and 1,3-di(tert-butylperoxyisopropyl)benzene. As specific examples of the crosslinking aid used in combination with the organic peroxide crosslinking agent, there can be mentioned polyfunctionl monomers such as triallyl cyanurate, triallyl isocyanurate, trimethylolpropane trimethacrylate, ethylene dimethacrylate, diallyl phthalate, toluylene bismaleimide, metaphenylene bismaleimide and divinylbenzene; and liquid polybutadiene.

Where the organic peroxide crosslinking agent is used, its amount is preferably in the range of 0.1 to 10 parts by weight, more preferably 0.2 to 8 parts by weight and especially preferably 0.3 to 5 parts by weight, based on 100 parts by weight of the sum of nitrile rubber (a) and vinyl chloride resin (b). When the amount of the crosslinking agent is too small, the polyblend composition is not crosslinked to the desired extent, and the crosslinked object is liable to have a low mechanical strength. In contrast, when the amount of the crosslinking agent is too large, the rate of crosslinking is too high and difficult to control, and the crosslinkable polyblend composition has poor moldability and processability. Where an organic peroxide crosslinking agent is used, the above-mentioned crosslinking aid is used preferably in an amount of 0.5 to 20 parts by weight, more preferably 0.7 to 10 parts by weight and especially preferably 1 to 5 parts by weight, based on 100 parts by weight of the sum of nitrile rubber (a) and vinyl chloride resin (b). When the amount of the crosslinking aid is too small, the polyblend composition is not crosslinked to the desired extent, and the crosslinked object is liable to have a low mechanical strength. In contrast, when the amount of the crosslinking aid is too large, the rate of crosslinking is too high and difficult to control, and the polyblend composition containing the crosslinking ingredient has poor moldability and processability.

The crosslinked object of the polyblend composition of the invention exhibits a reduced gasoline permeation and has a low brittle temperature. Therefore, the crosslinkable polyblend composition is suitable for the production of a fuel hose.

The fuel hose of the invention exhibits a reduced gasoline permeation and has a low brittle temperature and is made of the crosslinked object of the polyblend composition of the invention. The process for producing the fuel hose of the invention is not particularly limited, and the conventional process can be employed. Preferably the crosslinkable polyblend composition of the invention is shaped into a hose of a desired shape by a conventional shaping procedure such as injection molding and extrusion, and then the hose is subjected to curing such as steam curing.

The fuel hose of the invention may either have a single layer structure, or a multi-layer structure comprised of a layer of the crosslinked polyblend composition and one or more layers of other rubber or resin.

The present invention will now be specifically described by the following examples and comparative examples. In these examples, parts and % are by weight unless otherwise specified.

### Examples 1 and 2, and Comparative Examples 1 and 2

Using a polyblend composition ("Nipol SPB 5616" available from Zeon Corporation) comprising 70 parts of high NBR having a bound acrylonitrile content of 46% and a Mooney viscosity of 60 and 30 parts of polyvinyl chloride having a polymerization degree of 850, and a polyblend composition comprising 70 parts of high NBR having a bound acrylonitrile content of 46% and a Mooney viscosity of 60 and 30 parts of polyvinyl chloride having a polymerization degree of 850, and a polyblend composition ("Nipol 1203 JNS" available from Zeon Corporation) comprising 70 parts of medium-high NBR having a bound acrylonitrile content of 33% and a Mooney viscosity of 38 and 30 parts of polyvinyl chloride having a polymerization degree of 850, polyblend compositions for fuel hoses were prepared by using a B-type Banbury mixer (internal temperature: 50°C) according to the recipe shown in Table 1.

Mooney viscosity (ML₁₊₄, 100°C) of the as-prepared polyblend compositions (hereinafter referred to as "composition Mooney viscosity") was evaluated.

The remaining crosslinking ingredients (0.5 part of sulfur, 1.5 parts of tetramethylthiuram disulfide and 1.5 parts of N-cyclohexyl-2-benzothiazyl sulfenamide) were incorporated in each polyblend composition by using a roll mixer (surface temperature: 50°C).

Each polyblend composition having the crosslinking ingredients incorporated therein was subjected to press-curing at 150°C for 30 minutes to obtain a sheet-form crosslinked object specimen having a thickness of 2 mm. Physical properties and resistance to fuel oil were evaluated according to JIS K6301. The results are shown in Table 1. The fuel oil resistance was expressed by the volume change (%) as determined by measuring the volume of specimen before and after immersion in fuel oil C (isooctane/toluene 1:1 [by volume] mixture) at 40°C for 48 hours. The smaller the volume change, the better the fuel oil resistance.

Gasoline permeation was measured on fuel oil C by an aluminum cup method. That is, an aluminum cup having a 100 ml volume was charged with 50 ml of fuel oil C. The cup was covered up with a crosslinked object disc having a diameter of 61 mm a thickness of 2 mm, and the disc was adjusted by a fastening member so that the inner surface of the disc is contacted with fuel oil C at an area of 25.5 cm². The aluminum cup was left to stand in a thermostatic chamber maintained at 40°C. The weight of the cup was measured at intervals of 24 hours to determine the amount of permeated fuel oil at every 24 hours. The gasoline permeability was expressed by the maximum value of the amounts of permeated fuel oil as determined at intervals of 24 hours. The results are shown in Table 1.

The cold resistance was expressed by the brittle temperature as measured according to JIS K6301. The results are shown in Table 1.

### Example 3

A polyblend composition was prepared according to the same recipe and the same procedure as those in Example 1 wherein the amount of high NBR was changed from 70 parts to 80 parts and the amount of polyvinylk chloride was changed from 30 parts to 20 parts. The polyblend was crosslinked and its physical properties were evaluated in the same manner as in Example 1. The results are shown in Table 1.

Di(ethoxybutoxyethyl) adipate plasticizer used was "TP-95" available from Thiokol Chemical Co. Carbon black used was MAF carbon black "Seast 116" available from Tokai Carbon Co.

**Table 1**

| Examples | | | | Comparative Examples | | | |
|---|---|---|---|---|---|---|---|
| | 1 | 2 | 3 | 1 | 2 | 3 | 4 |
| Recipe (parts) | | | | | | | |
| (a) High NBR | 70 | 70 | 80 | - | 70 | 70 | 70 |
| Medium-high NBR | - | - | - | 70 | - | - | - |
| (b) PVC *1 | 30 | 30 | 30 | 30 | 30 | 30 | 30 |
| (c) DEBEA *2 | 15 | 30 | 30 | - | - | - | - |
| Dioctyl phthalate | - | - | - | 15 | 15 | - | - |
| Dioctyl adipate | - | - | - | - | - | 15 | - |
| Dioctyl sebacate | - | - | - | - | - | - | 15 |
| Ingredients | | | | | | | |
| Zinc oxide #1 | 5 | 5 | 5 | 5 | 5 | 5 | 5 |
| Stearic acid | 1 | 1 | 1 | 1 | 1 | 1 | 1 |
| Carbon black | 30 | 40 | 40 | 30 | 30 | 30 | 30 |
| Total amount (parts) | 151 | 186 | 180 | 151 | 151 | 151 | 181 |
| Comp. Mooney visc. *3 | 52 | 34 | 32 | 41 | 61 | 58 | 60 |
| Physical properties of crosslinked object | | | | | | | |
| Dry physical properties | | | | | | | |
| Tensile strength | | | | | | | |
| (kgf/cm²) | 201 | 186 | 180 | 197 | 197 | 203 | 181 |
| Elongation (%) | 401 | 430 | 460 | 520 | 390 | 420 | 370 |
| 100% TS *4 (kgf/cm²) | 65 | 52 | 41 | 44 | 71 | 60 | 64 |
| 300% TS *4 (kgf/cm²) | 159 | 134 | 125 | 112 | 159 | 151 | 181 |
| Hardness (JIS A) | 78 | 72 | 64 | 71 | 81 | 75 | 80 |
| Fuel oil resistance | | | | | | | |
| Volume change (%) | +23.8 | +13.8 | +14.6 | +38.0 | +29.8 | +31.6 | +42.2 |
| Gasoline permeability | | | | | | | |
| Amount permeated | | | | | | | |
| (mg·mm/m²/day) | 132 | 235 | 266 | 975 | 205 | 208 | 179 |
| Cold resistance | | | | | | | |
| Brittle temperature | | | | | | | |
| (°C) | -17.6 | -29.2 | -30.6 | -33.0 | -9.4 | -12.2 | -6.2 |
| | | | | | | | |

| | | | | | | | |
|---|---|---|---|---|---|---|---|
| Note, *1 Polyvinyl chloride | | | | | | | |
| *2 DEBEA = Di(ethoxybutoxyethyl) adipate | | | | | | | |
| *3 Composition Mooney Viscosity | | | | | | | |
| *4 TS: tensile stress | | | | | | | |

As seen from the data of gasosline permeation and brittle temperature in Example 1 and Comparative Examples 1 to 4 in Table 1, as compared with the case when the conventional polyblend composition comprising medium-high NBR and polyvinyl chloride is used (Comparative Example 1), when a polyblend composition comprising high NBR and polyvinylchloride is used (Example 1 and Comparative Examples 2 to 4), the crosslinked object exhibits a much reduced gasoline permeation. But, the brittle temperature is undesirably elevated to a great extent in Comparative Examples 2 to 4. In contrast, when di(ethoxybutoxyethyl) adipate, i.e., an alkanedicarboxylic acid ether ester plasticizer having an alkane structure with 3 to 8 carbon atoms, is used (Example 1), the elevation of the brittle temperature is minimized and, in spite of the minimized elevation of the brittle temperature, the gasoline permeation is more reduced than those in Comparative Examples 2 to 4.

When the amount of di(ethoxybutoxyethyl) adipate was varied (Examples 2 and 3), good results were obtained.

### Industrial Applicability

According to the present invention, there is provided a polyblend composition suitable for a fuel hose having excellent cold resistance and gasoline permeation resistance.

## Claims

1. A polyblend composition comprising (a) a nitrile rubber having a bound α,β-unsaturated nitrile content of at least 44% by weight, (b) a vinyl chloride resin, and (c) an alkanedicarboxylic acid ether ester plasticizer having an alkane structure with 3 to 8 carbon atoms.

2. The polyblend composition according to claim 1, wherein the nitrile rubber (a) comprises 43 to 63% by weight of bound α,β-ethylenically unsaturated nitrile. 57 to 25% by weight of bound conjugated diene, and not larger than 15% by weight of a bound copolymerizable monomer unit.

3. The polyblend composition according to claim 1 or 2, wherein the nitrile rubber (a) has a Mooney viscosity (ML₁₊₄, 100°C) of 25 to 140.

4. The polyblend composition according to any one of claims 1 to 3, wherein the vinyl chloride resin (b) has a polymerization degree of 550 to 2,500.

5. The polyblend composition according to any one of claims 1 to 4. wherein the amount of the nitrile rubber (a) is in the range of 95 to 50% by weight and the amount of the vinyl chloride resin (b) is in the range of 5 to 50% by weight, based on the total weight of the nitrile rubber (a) and the vinyl chloride resin (b).

6. The polyblend composition according to any one of claims 1 to 5, wherein the amount of the plasticizer (c) is 5 to 50 parts by weight based on 100 parts by weight of the sum of the nitrile rubber (a) and the vinyl chloride resin (b).

7. The polyblend composition according to any one of claims 1 to 6, which is a crosslinkable polyblend composition further comprising a crosslinking ingredient.

8. The polyblend composition according to claim 7, wherein the crosslinking ingredient comprises a sulfur-containing crosslinking agent or an organic peroxide crosslinking agent.

9. A crosslinked object prepared by crosslinking the polyblend composition as claimed in claim 7 or 8.

10. A fuel hose comprising the crosslinked object as claimed in claim 9.
